# EUROPEAN PATENT APPLICATION

(11) **EP 4 556 255 A1**
(43) Date of publication of application: **21.05.2025**
(21) Application number: 24213019.3
(22) Date of filing: 14.11.2024
(51) Int. Cl.: B60B 19/10, B60B 7/00

(54) **CONFIGURABLE WHEEL FOR A VEHICLE**

(30) Priority: 17.11.2023 IT 202300024396
(71) Applicant: FERRARI S.p.A., 41100 Modena (IT)
(72) Inventor: RAMIREZ RUIZ, Isabel, 41100 MODENA (IT)
(74) Representative: Studio Torta S.p.A.

(57) **Abstract**

A wheel (4) for a vehicle (1) includes a wheel hub unit (9) comprising, in turn, a stator portion (9a) to be coupled to a body (2) of the vehicle (1) by means of suspensions, a rotor portion (9b) and supporting means (9c) supporting the rotor portion (9b) on the stator portion (9a) in a rotatable manner about a rotation axis (H), characterized in that it comprises a plurality of blades (12) for a power absorbing turbomachine and a deployment mechanism (15) carried by a portion between the rotor portion (9b) and the stator portion (9a) and configured to conduct the blades (12) at least between a deployed configuration, in which the blades (12) are arranged so as to form an array of compressor blades adapted to compress an air flow along the rotation axis (H) during the use of the vehicle (1), thereby resulting in a drag on the vehicle (1), and a rest configuration, in which the blades (12) result in less drag on the vehicle (1) than the deployed configuration.

## Description

### CROSS-REFERENCE TO RELATED APPLICATIONS

This patent application claims priority from Italian patent application no. 102023000024396 filed on November 17, 2023, the entire disclosure of which is incorporated herein by reference.

### TECHNICAL FIELD

The invention relates to a wheel for a vehicle, in particular for a motor vehicle and even more in particular for a sports motor vehicle.

### PRIOR ART

Generally speaking, in the field of vehicles and especially in that of sports or racing motor cars, there is a need to minimize the wear of the components.

For example, the wheels of the vehicles are normally equipped with braking devices including mechanical parts that can selectively be brought into contact with one another to generate a friction torque contrary to the direction of rotation of the wheels.

These mechanical parts, while ensuring effective braking, are clearly subject to wear, so they define sensitive components with respect to the need discussed above.

Therefore, more in particular, there is a need to reduce the use or wear of the braking devices with mechanical parts in contact with one another, while ensuring the possibility of an equally effective and safe braking.

An object of the invention is to fulfil at least one of the needs discussed above, preferably in a simple and reliable fashion.

### DESCRIPTION OF THE INVENTION

The object is reached by a wheel for a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- figure 1 is a perspective view of a motor vehicle comprising a wheel according to the invention;
- figure 2 is a perspective view, on a larger scale, of an outer side of the wheel;
- figure 3 is similar to figure 2 and shows the wheel in a different operating configuration,
- figures 4, 5 are diametrical sections of the wheel, with parts removed for greater clarity, according to respective distinct variants,
- figures 6, 7 are perspective views, on a further enlarged scale and with parts removed for greater clarity, of an inner side of the wheel according to respective distinct embodiments, and
- figure 8 is a schematic plan view showing the operation of the embodiment of figure 6.

### EMBODIMENTS OF THE INVENTION

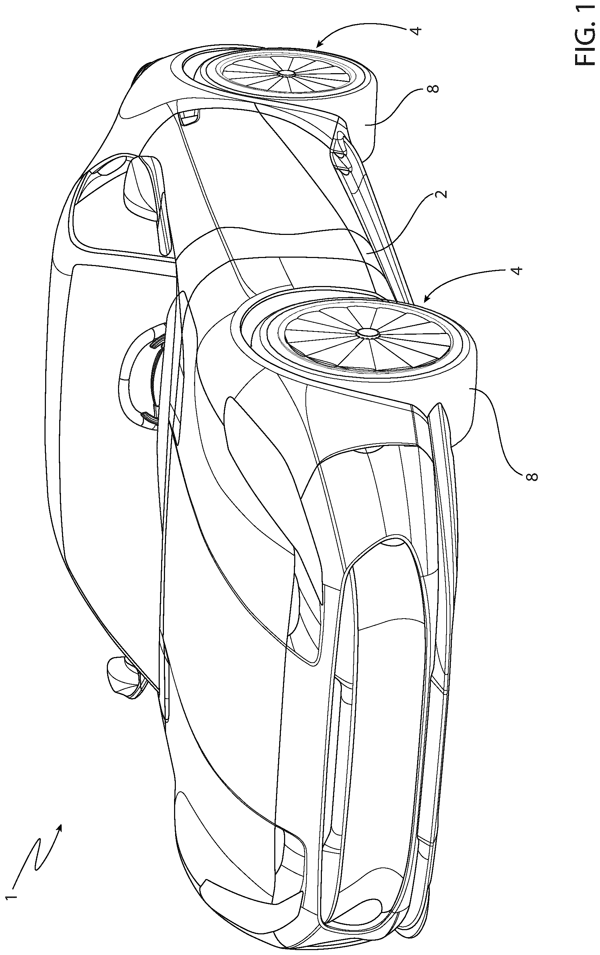

In figure 1, reference number 1 is used to indicate, as a whole, a vehicle, specifically a motor vehicle, in particular a sports or racing motor vehicle.

The motor vehicle 1 comprises a body 2 including, in turn, a frame not shown herein and a shell carried by the frame and defining the outer surfaces of the motor vehicle 1.

Furthermore, the motor vehicle 1 comprises a plurality of wheels 4, only two of them being shown in figure 1. The wheels 4 are coupled to the body 2 or, more precisely, to the frame by means of suspensions that are not shown herein.

The wheels 4 define the unsprung mass of the motor vehicle 1. The suspensions suspend the body 2 or, more precisely, the frame relative to the wheels 4, whereby the body 2 is part of the sprung mass of the motor vehicle 1.

The wheels 4 have similar features, for example except for the dimensions, which is why only one of the wheels 4 will be described more in detail below, provided that the features described for one of the wheels 4 also apply to the others.

The wheel 4 comprises a rim 5 having, in particular, a portion 5a with a tubular geometry. The rim 5 or, more precisely, the portion 5a has an axis H, around which the rim 5 extends.

The rim 5 defines an inner volume V, namely, in particular, the volume radially delimited within the portion 5a.

The axis H coincides with the rotation axis of the wheel 4. Indeed, the rim 5 rotates around the axis H during the rotation of the wheel 4.

Furthermore, the axis H is transversal relative to a travel direction of the motor vehicle 1. In particular, the axis H is parallel to the pitch axis of the motor vehicle 1.

The rim 5 further has an outer side surface 6 extending around the axis H, thereby defining a revolution surface, which encloses the volume V on the inside. More precisely, the volume V is enclosed or delimited within an inner side surface 6a of the rim 5.

The outer surface 6 further defines a seat or channel 7 configured to receive a tyre 8 of the wheel 4. The seat 7 is arranged on the opposite side of the volume V relative to the portion 5a or, more in general, of the rim 5 according to a radial direction relative to the axis H.

In particular, the tyre 8 is mounted on the rim 5 in the area of the seat 7, more in particular in typical ways.

In other words, the seat 7 allows the tyre 8 to be mounted.

In addition, the wheel 4 comprises a wheel hub unit 9, for example of a known type, having a rotor portion 9b fixed with respect to the rim 5, for example fixed by means of bolts, and a stator portion 9a, which supports the rotor portion 9b in a rotary manner around the axis H by means of a support device of the wheel hub unit, for example comprising radial rolling bearings 9c radially interposed between the stator portion 9a and the rotor portion 9b.

The stator portion 9a is coupled to the body 2 by means of the suspensions of the motor vehicle 1.

The rotor portion 9b can, for example, be fixed to an axle shaft of the motor vehicle 1 not shown herein, which, in turn, is driven by an engine of the motor vehicle 1 not shown herein. Alternatively, the wheel 4 could comprise an electric motor with a rotor fixed to the rotor portion 9b to cause the latter to rotate around the axis H.

Preferably, the wheel 4 comprises an annular member 10, which could alternatively be fixed to the rotor portion 9b or to the stator portion 9a

On the outer side of the wheel 4, the rim 5 has an end 5c extending in a ring around the axis H so as to internally delimit, more precisely according to a radial direction, an opening 11 of the rim 5 around the axis H. The annular member 10, in particular, goes through the opening 11 axially, i.e. along the axis H.

The annular member 10 extends in a ring or circularly around the axis H, in particular at least partially inside the volume V. The annular member 10 could optionally define a portion of a casing 13, in turn radially defining, on the inside, a cavity 14, which, as explained more in detail below, can be intended to accommodate wheel transmission members 4.

The opening 11 establishes a communication between the outside of the rim 5 and the inner volume V of the rim 5. More precisely, the opening 11 establishes a communication between the volume V and a space outside the rim 5 and, more in particular, in front of the rim 5 according to the axis H.

The wheel 4 further comprises a plurality of blades 12 and a deployment mechanism 15 configured to conduct the blades 12 at least between a deployed configuration and a rest or closing configuration.

The blades 12 are for a power absorbing turbomachine, namely for a compressor, in this case of the axial type, although they could even be suitable for a radial compressor according to variants that are not shown herein.

In other words, the blades 12 have the typical shape of the blades used for power absorbing turbomachines and, more precisely, for axial compressors.

In the deployed configuration, the blades 12 are arranged so as to form an array of compressor blades or a compressor half-stage, in particular of the axial type, so that the blades 12 are adapted to compress an air flow along the axis H during the use of the motor vehicle 1.

More precisely, the air flow is directed along the axis H.

In this specific case, the blades 12, in the deployed configuration, compress the airflow while it flows through the blades 12 from the outside of the rim 5 towards the inside of the volume V along the axis H.

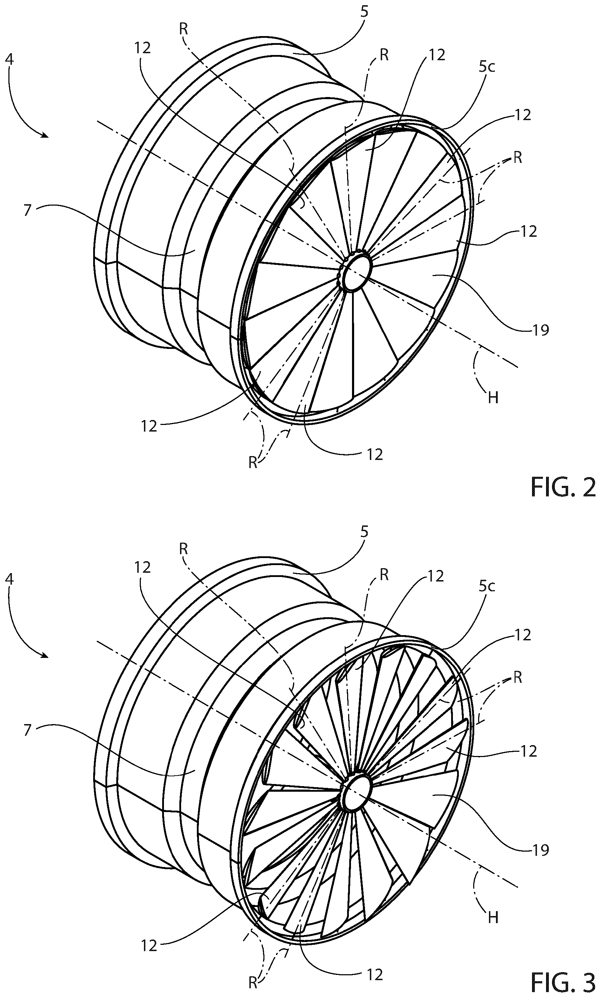

Alternatively or in addition, in the deployed configuration, the blades 12 could be oriented in the opposite way (each radially rotated by 180° on itself) with respect to what is shown in figure 3, so that the blades 12 compress the air flow while it flows through the blades 12 from the inside of the volume V towards the outside of the rim 5 along the axis H. Therefore, according this last variant, the blades 12 would operate as an air extractor extracting air from the rim 5.

Generally speaking, in the deployed configuration, the blades 12 are arranged so as to form a wheel of blades, i.e. with a configuration angularly distributed around the axis H, in particular according to an even distribution. In this way, the blades 12 form a plurality of channels, each formed between two angularly adjacent blades 12. Each one of the channels is shaped so as to compress the portion of the air flow flowing through it; for example, each one of the channels can be shaped like a nozzle, in particular of the converging or converging-diverging type.

In this specific case, the channels are axially directed from the outside of the rim 5 towards the inside of the volume V. Alternatively or in addition, in the variant with operation of the blades 12 as air extractor, the channels would be axially directed from the inside of the volume V towards the outside of the rim 5.

Therefore, in the deployed configuration, the blades 12 determine a drag on the motor vehicle 1. Indeed, the aerodynamic interference between the air flow and the blades 12 configured as a compressor translates into a force contrary to the travel direction of the motor vehicle 1.

More in detail, the air flow generated by the movement of the motor vehicle 1, which accelerates the surrounding air forming a wind in the direction contrary to the one in which the motor vehicle 1 is moving, slows down by flowing through the blades 12 in the deployed configuration, thus compressing itself; the increasing pressure of the air flow along the axis H, in turn, translates into at least a thrust on the blades 12 (and, hence, on the wheel 4) directed in an opposite way relative to travel direction of the motor vehicle 1.

In the rest configuration, the blades 12 determine less drag on the motor vehicle 1 than the deployed configuration.

In particular, in the rest configuration, the blades 12 define or form part of a wall adapted to axially close or cover the opening 11 or, more simply, a wall that axially closes or covers the opening 11. More in particular, the wall is substantially continuous, i.e. without macroscopic inner empty areas, although it does not necessarily cover the opening 11 with a complete fluid-tight seal, so that fluid leakage could still occur through the wall.

In practice, the blades 12 in the rest configuration are arranged in such a way that two angularly adjacent blades 12 have respective radial edges substantially overlapping or flush with one another, namely arranged in such a way that there is no space between the radial edges, unless there is a negligible relative clearance.

More precisely, the wall formed by the blades 12 in the rest configuration extends radially from the annular member 10 ending with a circular edge around the axis H. Therefore, the wall is shaped like a circular crown around the axis H; the diameter or outer radius of the circular crown is smaller than the inner diameter of the rim 5.

Furthermore, for example, the wall or the blades 12 could protrude (albeit slightly) axially, i.e. along the axis H, with respect to the rim 5 or the end 5c of the rim 5.

The axial covering of the opening 11 by means of the blades 12 leads to a reduction in the aerodynamic drag on the motor vehicle 1, for example because the flow of air through the opening 11 from the outer side of the wheel 4 is hindered. Furthermore, specifically, the wall formed by the blades 12 does not exert a compressive action upon the air flow.

The annular member 10 preferably is part of the deployment mechanism 15 and is coupled to the blades 12.

The blades 12 are hinged to the annular member 10 around respective hinge axes R directed radially relative to the axis H. Therefore, the blades 12 can rotate, around the respective axes R, between the deployed configuration and the rest configuration.

In this way, the rotation angle (i.e. the pitch) of the blades 12 around the axes R is adjustable or variable by means of the deployment mechanism 15. Consequently, the drag offered by the blades 12 is adjustable by means of the deployment mechanism 15, since it depends on the angle of rotation of the blades 12 about the axes R. Indeed, the rotation angles of the blades 12 determine the characteristics and the dimensions of the channels defined between the blades 12.

The angle of rotation of all the blades 12 in the rest configuration can be assumed to be equal to zero, without losing generality.

The maximum rotation angle of the blades 12, corresponding to the deployed configuration, could range from 15° to 30°.

Therefore, each one of the blades 12 could be rotated around the corresponding axis R by a corresponding angle ranging from 15° to 30° in the transition from the rest configuration to the deployed configuration.

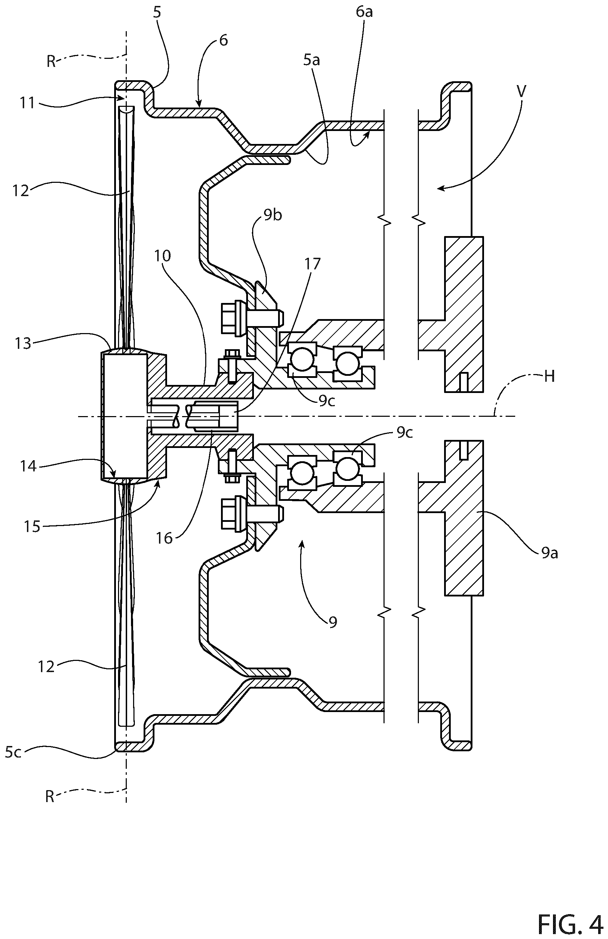

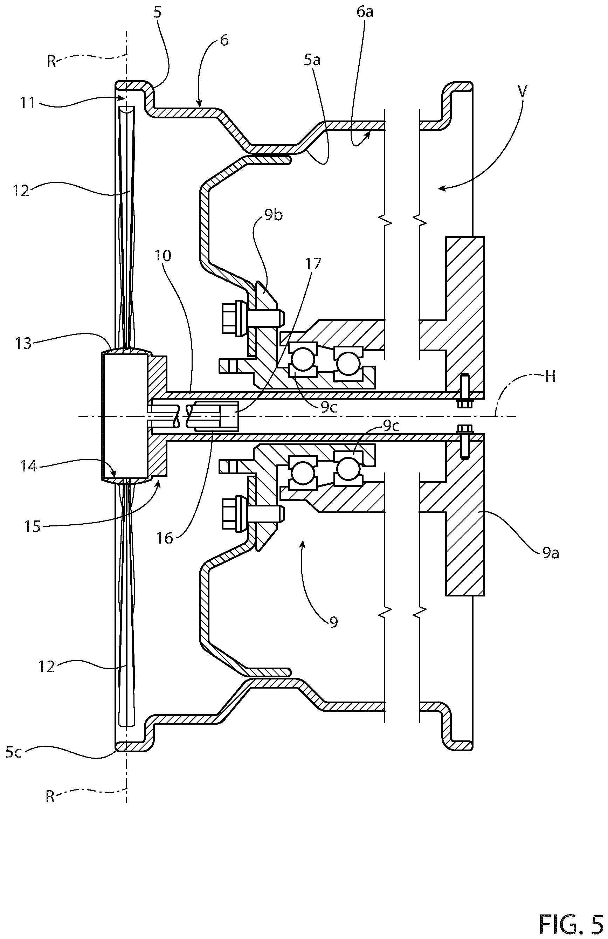

The deployment mechanism 15 could be carried by the rotor portion 9b (figure 4) or by the stator portion 9a (figure 5), in particular depending on whether the annular member 10 is fixed to the rotor portion 9b or to the stator portion 9a.

Specifically, if the annular member 10 is fixed to the rotor portion 9b, then the deployment mechanism 15 is carried by the rotor portion 9b. Similarly, if the annular member 10 is fixed to the stator portion 9a, the deployment mechanism 15 is carried by the stator portion 9a.

When the deployment mechanism is carried by the stator portion 9a, the blades 12 in the deployed configuration form a stator of a compressor, specifically an axial compressor.

When the deployment mechanism is carried by the rotor portion 9b, the blades 12 in the deployed configuration form a rotor of a compressor, specifically an axial compressor.

The rotor of the compressor rotates together with the rim 5, specifically in an integral manner, around the axis H.

During the use of the motor vehicle 1, the compressor rotor is even more effective than the compressor stator in exerting a braking action upon the motor vehicle 1. Indeed, the work associated with the rotation of the wheel 4 is transferred to the air flow flowing between the blades 12 along the axis H by the rotor of the compressor, whereby the work is spent to compress the air flow. This corresponds to a slowing down of the rotation of the wheel 4, i.e. a braking action for the motor vehicle 1.

The deployment mechanism 15 is driven by a motor 16, which preferably is part of the deployment mechanism 15 itself or, more in general, of the wheel 4. Specifically, the motor 16 is a linear motor, more specifically an electric motor. For example, the motor 16 could be powered by a battery of the motor vehicle 1.

The motor 16 is carried by the annular member 10; more precisely, the motor 16 has at least one fixed portion, which is fixed with respect to the annular member 10, namely is carried in a fixed position by the annular member 10.

The motor 16 drives a shaft 17 of the deployment mechanism 15 in a translating manner along the axis H. In other words, the motor 16 is coupled to the shaft 17 in order to cause the shaft 17 to translate along the axis H. For example, the motor 16 could have a translating portion translating with respect to the fixed portion, said translating portion being fixed with respect to the shaft 17.

The shaft 17 is also part of a transmission assembly 18 of the deployment mechanism 15; the transmission assembly 18 is driven by the motor 16 to cause the rotation of the blades 12 from the rest configuration to the deployed configuration and vice versa, namely to rotate the blades 12 around the respective axes R.

The transmission assembly 18 is configured to transmit an output power from the motor 16 to each one of the blades 12, so that each one of the blades 12 rotates around the corresponding axis R in a manner corresponding to the output power delivered by the motor 16.

In addition, the wheel 4 comprises a blade 19 fixed to the annular member 10 and arranged in the area of the opening 11. The vane 19 is part of the wall that covers the opening 11 in the rest configuration 12 of the blades.

The shaft 17 is coupled to the annular member 10 in a translating manner with respect to the latter along the axis H. For example, the shaft 17 could be arranged inside the annular member 10 and/or be coaxial to the annular member 10.

The blades 12 are coupled to the shaft 17 in such a way that a translation of the shaft 17 corresponds to respective rotations of the blades 12 around the relative axes R. In other words, the translation of the shaft 17 determines the rotation of the blades 12 around the respective axes R. In the same way, consequently, the output power delivered by the motor 16 determines the rotation of the blades 12 around the respective axes R.

Therefore, the rotation angle of each one of the blades 12 around the relative axis R depends, according to a one-to-one correspondence, on the translation of the shaft 17 or on the output power delivered by the motor 16 by means of the deployment mechanism 15.

Thus, the set of rotations of the blades 12 around the respective axes R can be controlled by means of a control, for example an open-loop or closed-loop control, of the output power delivered by the motor 16 or of the translation of the shaft 17. Therefore, the same applies to the braking torque determined on the wheel 4 by the blades 12 during the use of the motor vehicle 1, the braking torque being associated with the set of rotations of the blades 12. The wheel 4 could therefore comprise a control unit configured to control, for example with an open-loop or closed-loop control, the motor 16 or the translation of the shaft 17 based on a target on the set of rotations of the blades 12 or on the braking torque on the wheel 4.

As discussed more in detail below, the rotations of the blades 12 can be differentiated from one another for a same translation of the shaft 17. In other words, the translation of the shaft 17 determines differentiated rotations of the blades 12.

Therefore, the transmission assembly 18 could be configured to impose differentiated rotations on the blades 12 around the respective axes R, in particular in response to an output power delivered by the motor 16.

More specifically, the blades 12 can be divided into a first and a second set of blades. The blades 12 of each one of the sets have the same rotations in response to the translation of the shaft 17 or to the output power delivered by the motor 16, but the rotations of one set are distinct from those of the other set.

Clearly, the rotations of the blades 12 of the two sets are distinguished by the relative distinct angles of rotation around the respective axes R.

More in particular, the blades 12 of each set are all arranged angularly in sequence one after the other around the axis H. In other words, the blades 12 of the respective sets ideally occupy respective distinct circular sectors around the axis H. In the embodiments shown herein, on the one hand, the blades 12 of the respective sets are separated from the blade 19 angularly interposed between a blade 12 of the first set and a blade 12 of the second set, whereas, on the other hand, a blade 12 of the first set angularly follows a blade 12 of the second set.

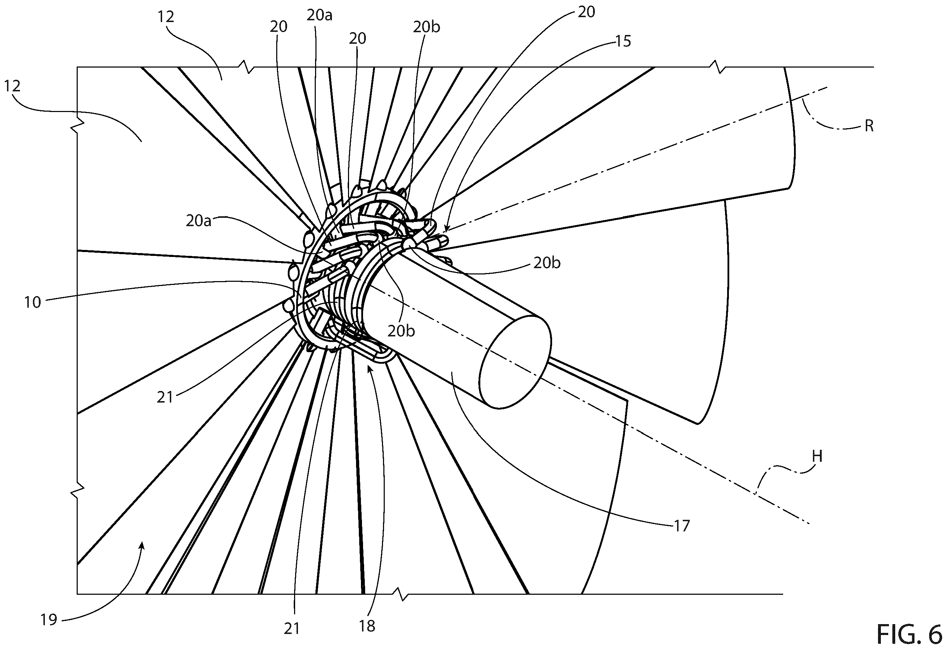

According to the embodiment of figure 6, the transmission assembly 18 comprises, for each one of the blades 12, a corresponding connecting rod 20.

Each connecting rod 20 has an end 20a fixed to the corresponding blade 12 and an opposite end 20b, which engages a groove 21 of the shaft 17 in a sliding manner along the groove 21 itself.

The groove 21 extends according to a profile around the shaft 17, in particular on a plane orthogonal to the axis H, more in particular according to a circular arc profile.

The groove 21 has a guiding function for the end 20b along the profile of the groove 21, namely it is configured to guide the end 20b in a sliding manner along the profile of the groove 21.

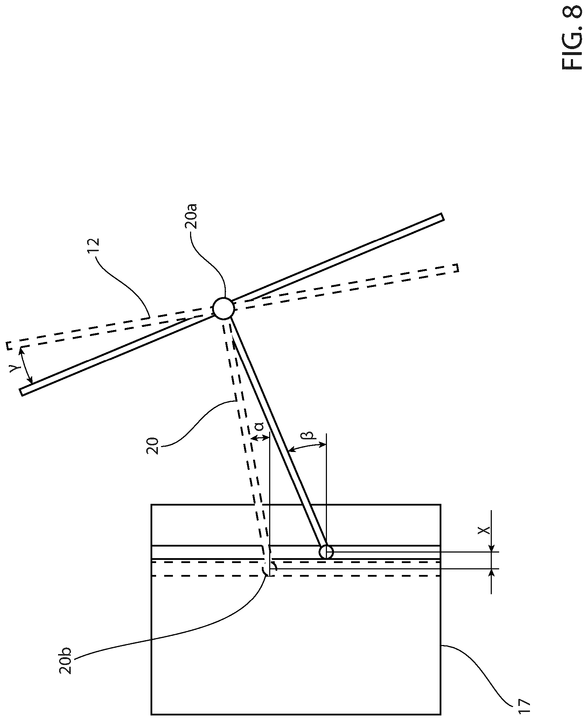

The connecting rod 20 is substantially rigid, namely it has a fixed length between the ends 20a, 20b. The annular member 10, on which the blades 12 are hinged, also is axially fixed (along the axis H), although it can optionally rotate together with the rim 5, when it is fixed with respect to the rotor portion 9a. Therefore, the translation of the shaft 17 leads to a sliding of the end 20b along the profile of the groove 21 and to a consequent change of angle of the connecting rod 20 with respect to the axis H or with respect to the end 20a, whose axial position remains fixed in the area of the axis R, around which the corresponding blade 12 is hinged (this is clearly visible in figure 8, where the movement of the connecting rod 20 is schematically represented). The change of angle of the connecting rod 20 thus corresponds to the rotation of the corresponding blade 12 around the axis R, as the end 20a rotates around the axis R.

In figure 8, the parts shown with a broken line correspond to an initial position of the connecting rod 20 and of the relative blade 12. The initial angle of the connecting rod 20 with respect to the axis H is indicated with the symbol α. Following a translation x of the shaft 17, the angle of the connecting rod 20 changes and is indicated in figure 8 with the symbol β; the rotation carried out by the blade 12 around the relative axis R is indicated by the symbol γ in figure 8.

Therefore, the end 20b covers an arc of a circle along the groove 21, thus making an angular movement around the axis H. At the same time, the end 20b follows the translation of the shaft 17 as it is axially constrained to it by the engagement of the groove 21.

Therefore, the end 20b conceptually makes a rotation-translation, which corresponds to a rotation of the corresponding blade 12 around the relative axis R.

Actually, in the specific example of figure 6, the shaft 17 has a plurality of grooves 21 or, more precisely, two grooves 21 spaced apart from one another along the axis H.

The connecting rods 20 with the ends 20a fixed to the corresponding blades 12 of the first set have the ends 20b engaging one of the two grooves 21, whereas the connecting rods 20 with the ends 20a fixed to the corresponding blades 12 of the second set have the ends 20b engaging the other one of the two grooves 21.

Thus, the connecting rods 20 can be conceptually divided into two sets of connecting rods relevant to the blades 12 of the first set and to the blades 12 of the second set, respectively, wherein the connecting rods 20 of each one of the sets of connecting rods have respective lengths equal to one another but distinct from those of the connecting rods 20 of the other one of the sets of connecting rods.

The different length and axial arrangement (along the axis H) of the connecting rods 20 therefore leads to corresponding different rotations of the blades 12 of the first and of the second set, respectively, for a same translation of the shaft 17.

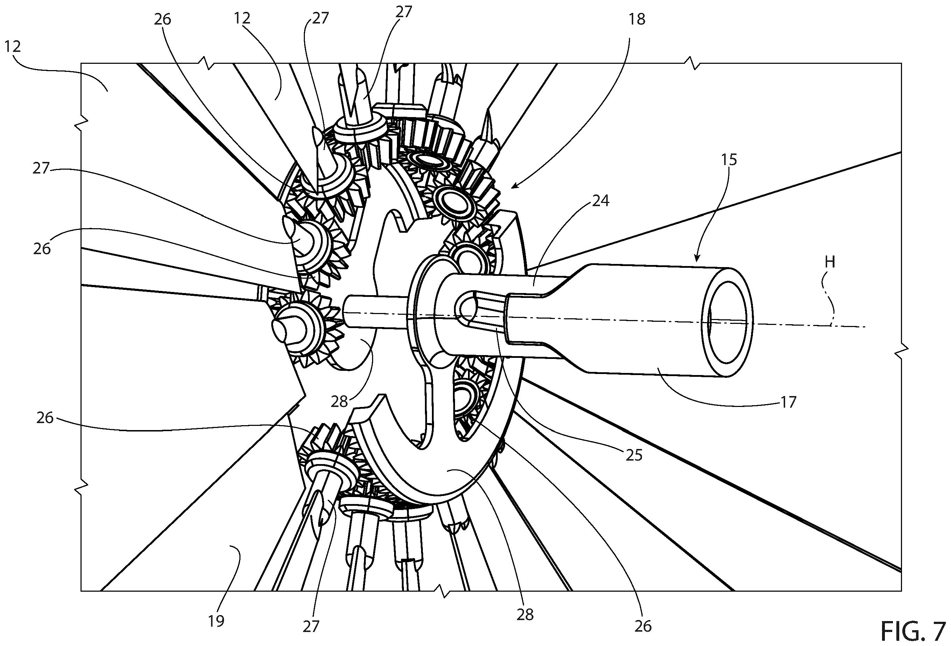

According to the embodiment of figure 7, the transmission assembly 18 comprises a further shaft 24 coupled to the shaft 17 in such a way that the translation of the shaft 17 causes the shaft 24 to rotate around the axis H.

More in detail, the shafts 17, 24 are coaxial to one another. In particular, the shaft 17 is internally hollow and axially accommodates the shaft 24.

Specifically, the shaft 24 has a groove or slot 25, which extends in an inclined manner relative to the axis H, i.e. according to a direction that is not parallel to the axis H. The shaft 17 has a pin not shown herein, which engages the slot 25. In this way, for the slot 25 is inclined relative to the axis H, the pin acts as a cam on the edges of the slot 25, since the translation of the pin together with the shaft 17 inside the slot 25 generates a thrust on the edges of the slot 25 according to a direction that is tangential relative to the axis H. In turn, the thrust leads to the rotation of the shaft 24 around the axis H.

Furthermore, the transmission assembly 18 comprises a corresponding toothed wheel or pinion 26 for each one of the blades 12.

The pinions 26 are fixed to the respective blades 12 and can rotate around the relative axes R.

More precisely, the blades 12 have respective pins 27 that radially go through the annular member 10 and are hinged to it in a rotary manner around the axes R. The pins 27 end towards the axis H with respective ends carrying the pinions 26 in a fixed and coaxial position on the axes R.

The pinions 26 are, in particular, arranged inside the cavity 14 of the casing 13.

Each one of the pinions 26 meshes with a corresponding toothed wheel or ring 28 fixed to the shaft 24.

The toothed ring 28 has, in particular, a base extending around the axis H and a teeth axially projecting from the base along the axis H.

Preferably, the toothed ring 28 forms a bevel or hypoid gear with each one of the pinions 26 meshing with it.

In this way, the translation of the shaft 17 causes a rotation of the shaft 24, which, in turn, causes the rotation of the toothed ring 28, which meshes with the respective pinions 26, thus causing the corresponding blades 12 to rotate.

Actually, in the specific example of figure 7, the transmission assembly comprises two toothed rings 28 fixed to the shaft 24 and axially spaced apart from one another along the axis H.

The pinions 26 fixed to the corresponding blades 12 of the first set mesh with one of the toothed rings 28, whereas the pinions 26 fixed to the corresponding blades 12 of the second set mesh with the other one of the toothed rings 28.

Hence, the gears created between pinions 26 and toothed rings 28 can be conceptually divided into two types of gears relevant to the blades 12 of the first set and to the blades 12 of the second set, respectively, wherein the gears have respective distinct properties.

In this way, the blades 12 of the first and of the second set are able to rotate in a differentiated way for a same translation of the shaft 17.

Owing to the above, the advantages of the wheel 4 according to the invention are evident.

The blades 12 can selectively be used to reduce or increase the aerodynamic drag on the motor vehicle 1, by means of the deployed configuration and the rest configuration, respectively.

The controlled increase in aerodynamic drag can advantageously be used to brake the motor vehicle 1, without using mechanical elements in mutual contact.

In addition, the blades 12 can normally be kept in the rest configuration, so that the aerodynamic drag normally is minimised, except for those cases in which it is appropriate to brake the motor vehicle 1.

Furthermore, the transmission assembly 18 according to both embodiments of figures 6, 7 is particularly simple, reliable and effective.

Finally, the wheel 4 according to the invention can clearly be subject to changes and variants, which, though, do not go beyond the scope of protection defined by the appended claims.

In particular, each one of the details included in the figures is independent of the other details.

More in particular, the mentioned details include each one of the arrangements of the various components shown relative to the other components.

More in particular, the shapes and the dimensions shown are mere examples and are not tightly linked to the arrangement of the components.

## Claims

1. **-** Wheel (4) for a vehicle (1), the wheel (4) comprising
- a wheel hub unit (9) in turn comprising a stator portion (9a) to be coupled to a body (2) of the vehicle (1) by suspensions, a rotor portion (9b), and supporting means (9c) supporting the rotor portion (9a) on the stator portion (9b) in a rotatable manner about a rotation axis (H),
**characterized by** comprising
- a plurality of vanes (12) for a power absorbing turbomachine, and
- a deployment mechanism (15) carried by a portion between the rotor portion (9a) and the stator portion (9b) and configured to conduct the vanes (12) at least between a deployed configuration, in which the vanes (12) are arranged to form an array of compressor blades adapted to compress an air stream along the rotation axis (H) during vehicle operation (1), thereby resulting in drag on the vehicle (1), and a rest configuration, wherein the vanes (12) result in less drag on the vehicle (1) than the deployed configuration.

2. **-** The wheel according to claim 1, further comprising a rim (5) fixed to the rotor portion, extending about the rotation axis (H), and defining an opening (11) about the rotation axis (H) between an inner volume (V) of the rim (5) and an outer space of the rim (5), and wherein the vanes (12) in the rest configuration form part of a wall adapted to axially cover said opening (11).

3. **-** The wheel according to claim 1 or 2, wherein the deployment mechanism (15) couples the vanes (12) to the stator portion (9b), so that the array of compressor blades in the deployed configuration defines a compressor stator.

4. **-** The wheel according to claim 1 or 2, wherein the deployment mechanism (15) couples the blades (12) to the rotor portion (9b), so that the array of compressor blades in the deployed configuration defines a compressor rotor rotating together with the rotor portion (9b).

5. **-** The rotor according to any one of the preceding claims, wherein the deployment mechanism (15) comprises an annular member (10) fixed with respect to said portion and extending circularly about the rotation axis (H), the vanes (12) being hinged to the annular member (10) about respective hinge axes (R) directed radially relative to the rotation axis (H), whereby the vanes (12) are rotatable about the respective hinge axes (R) between the deployed configuration and the rest configuration.

6. **-** The wheel according to claim 5, wherein the deployment mechanism (15) comprises a motor (16) and transmission means (18) driven by the motor (16) to impose a rotation of the vanes (12) from the rest configuration to the deployed configuration.

7. **-** The wheel according to claim 6, wherein the transmission means (18) are configured to impose a differential rotation to a first and a second set of vanes between said vanes (12), such that the first set of vanes and the second set of vanes rotate about the corresponding hinge axes (R) with first and second rotation angles distinct from each other, respectively.

8. **-** The wheel according to claim 6 or 7, wherein the transmission means (18) comprise a shaft (17) driven by the motor (16) in a translating manner along the rotation axis (H), wherein a translation of the shaft (17) drives the rotation of the vanes (12) about the respective hinge axes (R) .

9. **-** The wheel according to claim 8, wherein the transmission means (18) comprise for each of the vanes (12) a corresponding connecting rod (20) having a first connecting rod end (20a) fixed to the corresponding of the vanes (12) and a second connecting rod end (20b) engaging a groove (21) of the shaft (17) in a sliding manner, the groove (21) extending around the shaft (17) on a plane orthogonal to the rotation axis (H).

10. **-** The wheel according to claim 8, wherein the transmission means (18) comprise
- an additional shaft (24) coupled to the preceding shaft (17) such as to be brought into rotation about the rotation axis (H) by the translation of the preceding shaft (17), and
- a corresponding toothed wheel (26) for each of the vanes (12), the toothed wheel (26) being fixed to the corresponding of the vanes (12), rotatable about one of the hinge axes (R), and meshing with a further toothed wheel (28) fixed to the additional shaft (24).
